Europäisches Patentamt

(19) European Patent Office

Office européen des brevets

(11) Publication number: **0 458 607 A1**

## (12) EUROPEAN PATENT APPLICATION

(21) Application number: **91304612.4**

(22) Date of filing: **21.05.91**

(51) Int. Cl.⁵: **H01B 5/10, // G02B6/44**

(30) Priority: **22.05.90 GB 9011423**

(43) Date of publication of application:
**27.11.91 Bulletin 91/48**

(84) Designated Contracting States:
**AT BE CH DE DK ES FR GB GR IT LI LU NL SE**

(71) Applicant: **BICC Public Limited Company**
**Devonshire House Mayfair Place**
**London W1X 5FH (GB)**

(72) Inventor: **Dawson, John Robert**
**26, Aigburth Avenue**
**Liverpool L19 9EB (GB)**

(74) Representative: **Ross Gower, Edward Lewis et al**
**BICC Group Patents & Licensing Department**
**Network House 1 Ariel Way**
**London W12 7SL (GB)**

(54) **Overhead electric & optical transmission systems.**

(57)     A flexible overhead electric conductor for use in the provision of a composite flexible overhead electric conductor having throughout its length an elongate compartment in which at least one flexible optical guide is loosely housed has, extending throughout the length of the conductor, at least one elongate compartment 4 within which is loosely housed at least one flexible line 2 of a non-optical material which is of high tensile strength and which is capable of withstanding the temperatures to which it is likely to be subjected during manufacture of the conductor. The flexible line can be employed to draw a flexible optical guide into the elongate compartment 4 at any time after manufacture of the conductor but, preferably, after the conductor has been suspended between the towers of an overhead electric transmission system.

Fig.1.

This invention relates to an overhead electric and optical transmission system comprising at least one composite flexible electric conductor incorporating at least one optical fibre suspended freely in long lengths between towers or other upstanding supports mutually spaced along the route of the system.

In the Complete Specification of our British Patent No: 1598438 there is described and claimed a composite flexible overhead electric conductor which is now widely used in overhead electric and optical transmission systems both in the United Kingdom and elsewhere and which comprises at least one layer of helically wound bare elongate elements of metal or metal alloy, at least one elongate compartment within and extending throughout the length of the conductor and, loosely housed in the elongate compartment or at least one of the elongate compartments, at least one separate optical fibre and/or at least one optical bundle. In a preferred embodiment of the composite flexible overhead electric conductor of our aforesaid patent, the elongate compartment is the bore of a substantially circumferentially rigid central core of metal or metal alloy which is surrounded by a layer or layers of helically wound bare elongate metal elements.

In circumstances in which, during manufacture of a composite flexible overhead electric conductor in accordance with our aforesaid patent, the or each separate optical fibre and/or optical bundle is likely to be subjected to excessive temperature - such as is the case when the or each optical fibre and/or optical bundle is introduced into the bore of a circumferentially rigid central tube of metal or metal alloy during extrusion of the tube - precautions have to be taken to ensure that the optical fibre and/or bundle is not damaged due to its subjection to such excessive temperature. Usually these precautions comprise providing the or each optical fibre and/or optical bundle with a protective layer of thermally insulating material and/or adopting special reduction and/or cooling techniques for the extruded metal tube. Whatever precautions are taken, the inevitable consequence is an undesirable increase in cost of manufacture of composite conductor and, hence, in cost of the composite conductor to the customer.

It is an object of the present invention to provide, for use in the provision of a composite flexible overhead electric conductor in accordance with our aforesaid patent, an improved flexible overhead electric conductor into an elongate compartment of which at least one flexible optical guide comprising at least one optical fibre can be readily introduced at any time after manufacture of the conductor.

According to the invention, the improved conductor comprises at least one layer of helically wound bare elongate elements of metal or metal alloy, at least one elongate compartment within and extending throughout the length of the conductor and, loosely housed in the elongate compartment or at least one of the elongate compartments throughout the length of the compartment, at least one flexible line of a non-optical material which is of high tensile strength and which is capable of withstanding the temperatures to which it is likely to be subjected during manufacture of the conductor.

The or each flexible line may be at least one wire of steel or other suitable metal or metal alloy or it may be of any suitable heat resistant non-metallic material of high tensile strength, for example an aromatic polyamide. Where the or each flexible line is at least one wire of steel or other suitable metal or metal alloy, the wire may have an overall coating of a heat-resistant electrically insulating material.

In one preferred aspect of the invention, the elongate compartment is within and extends throughout the length of a substantially circumferentially rigid central core and the or each layer of helically wound bare elongate elements of metal or metal alloy surrounds the central core. Preferably, the circumferentially rigid central core is an extruded tube of metal or metal alloy.

Where a composite flexible overhead electric conductor is to include a plurality of separate optical fibres and or optical bundles, the circumferentially rigid central core may be of composite form and comprise a central solid elongate member of metal or metal alloy having in its outer surface at least two circumferentially spaced helically extending slots and, surrounding the slotted member, a tube of metal or metal alloy, at least one flexible line being loosely housed in at least one of the elongate compartments defined by the helically extending slots and surrounding tube.

The or each flexible line of the improved conductor can be used to introduce a flexible optical guide comprising at least one optical fibre into the elongate compartment in which the flexible line is loosely housed at any time after manufacture of the conductor by securing the leading end of the flexible optical guide to the flexible line at one end of the conductor and by applying a tensile force to the flexible line at the other end of the conductor to draw the flexible line out of the elongate compartment and, at the same time, to draw the flexible optical guide into the elongate compartment. For relatively short lengths of conductor, a flexible optical guide can be drawn into the or an elongate compartment of the conductor using the or a flexible line whilst the conductor is wound on a cable drum but, for reasons that will be explained, it is preferred to draw a flexible optical guide into the or an elongate compartment of the conductor using the or a flexible line after the conductor has been suspended between towers or other upstanding supports mutually spaced along the route of an overhead electric transmission system.

The route of an overhead electric transmission system can extend for several kilometres and, when suspending a flexible overhead electric conductor between mutually spaced towers or other upstanding supports of the system it is necessary to interconnect end-to-end, both electrically and mechanically, several individual lengths of conductor because the length of any one of these conductors is limited by the amount of conductor that can be readily wound on a cable drum without damaging the conductor; usually each individually conductor is only hundreds of metres in length. Thus, in suspending a conductor along the entire route of an overhead electric transmission system, many conductor joints may have to be effected.

In the case of an overhead electric and optical transmission system in which a flexible electric conductor incorporates at least one optical fibre, at the position of each conductor joint, one or more than one optical fibre splice or joint must also be effected, depending upon the number of optical fibres in the conductor, thereby substantially increasing the time spent in and hence the cost of suspending the composite conductor in the system; that is to say, the frequency of optical fibre splices or joints along a conductor of the system is dictated by the number of individual lengths of flexible conductor it is necessary to interconnect end-to-end in order to obtain a conductor extending throughout the full length of the system. This situation is unfortunate because an optical fibre can be manufactured and wound on a cable drum or reel, without any splices or joints in the optical fibre, in a length of many kilometres and, in most circumstances, in a length substantially greater than the length of the route of an overhead electric and optical transmission system.

Since the or each flexible line of the improved conductor of the present invention is not required to carry either electric current or an optical signal, mechanical jointing of the flexible lines of two individual lengths of the improved conductor to be interconnected end-to-end is straightforward and only necessitates ensuring that the mechanical joint will not impede drawing of the interconnected flexible lines along aligned elongate compartments of the jointed conductors and is capable of withstanding the tensile force to which it will be subjected when the jointed flexible lines are employed to draw a flexible optical guide into aligned elongate compartments of the jointed conductors.

Accordingly, the invention also includes an improved method of suspending between towers or other upstanding supports mutually spaced along the route of an electric and optical transmission system a composite flexible overhead conductor having within and extending throughout the length of the conductor at least one elongate compartment in which at least one flexible optical guide comprising at least one optical fibre is loosely housed, which improved method comprises electrically and mechanically connecting end-to-end at least two lengths of the improved flexible conductor as hereinbefore described, each having within and extending along said length of conductor at least one elongate compartment in which at least one flexible line is loosely housed, in such a way that the flexible lines of interconnected conductor lengths are mechanically jointed together and the elongate compartments of interconnected conductor lengths are substantially smoothly continuous; stringing the conductor consisting of two or more interconnected conductor lengths between a plurality of towers or other upstanding supports mutually spaced along the route of the system; and, after the conductor has been strung between said towers or other upstanding supports, accommodating at least one length of flexible optical guide comprising at least one optical fibre within and throughout the length of at least one substantially smoothly continuous elongate compartment within the suspended conductor by detachably connecting a leading end of the length of optical guide to the or a flexible line at one end of the suspended conductor and by applying a tensile force to said flexible line at the other end of the suspended conductor in such a way as to draw said flexible line out of the elongate compartment within which it is loosely housed and to draw said flexible optical guide into the elongate compartment until the length of optical guide is loosely housed in and throughout the length of the elongate compartment of the suspended conductor.

Preferably, the length of optical guide is so drawn into the substantially smoothly continuous elongate compartment of the suspended conductor that there is an excess length of optical guide loosely housed within the compartment.

By the expression "substantially smoothly continuous" as used to describe the elongate compartment within the suspended conductor is meant a compartment having no step or other abutment protruding into the compartment at the position of a conductor joint or elsewhere in the length of conductor which might inhibit or restrict withdrawal of the or a flexible line and advance of a flexible optical guide along the compartment.

Where the or an elongate compartment of the improved conductor has two or more flexible lines loosely housed in the compartment, after one of the flexible lines has been used to draw a flexible optical guide into the compartment, one or each of the remaining flexible lines can be used at any subsequent time to draw another flexible optical guide into the compartment and thereby upgrade the installation of which the conductor is a part.

Individual lengths of conductor having within and extending throughout the length of the conductor at least one elongate compartment may be electrically or mechanically connected end-to-end by any method which will ensure that the elongate compartments of the interconnected conductor lengths are substantially smoothly continuous. Where, as is preferred, each conductor length comprises one or more than one layer of bare elongate elements of metal or metal alloy helically wound around a substantially circumferentially rigid central core having at least one bore or other passage within and extending throughout the length of the core, two such conductor lengths are preferably electrically and mechanically connected end-to-end by means of a sleeve of metal or metal alloy which overlies adjacent end parts of the cores of the two conductor lengths - that have been so aligned that the axes of the bores or other passages of the cores are co-linear - and which is compression jointed or otherwise permanently secured to said neighbouring end parts of the cores; the or each layer of helically wound bare elongate elements of metal or metal alloy of the two conductors may subsequently be electrically and mechanically connected end-to-end by any convenient conventional technique.

Mechanical jointing of adjacent ends of the flexible lines of two conductor lengths is preferably effected by means of a sleeve of metal or metal alloy which overlies adjacent end parts of the flexible lines and which is compression jointed or otherwise permanently secured to said neighbouring end parts of the lines. Alternatively, depending on the material of the flexible lines, adjacent ends of the flexible lines of two conductor lengths may be welded or tied together.

Stringing of the conductor consisting of said two or more interconnected lengths of the improved conductor of the present invention between a plurality of towers or other upstanding supports mutually spaced along the route of the system can be effected by any known technique.

The or each flexible optical guide may be a separate optical fibre or it may be an optical fibre element comprising two or more optical fibres assembled together such as, for example, an optical fibre ribbon comprising a plurality of optical fibres extending side by side with their axes lying in a substantially common plane. One optical fibre ribbon structure which is especially suitable for use in the improved method of the present invention is described and claimed in the specification of our British Patent No: 2141558B.

In addition to reducing substantially the cost otherwise incurred in suspending between towers or other upstanding supports mutually spaced along the route of an overhead electric and optical transmission system a composite flexible overhead electric conductor in accordance with our aforesaid patent since it is no longer necessary to effect at least one optical fibre splice or joint at each conductor joint, the present invention has the additional important advantage that the or each flexible optical guide comprising at least one optical fibre can be readily loosely housed in an extruded or other seamless metal tube, or other elongate metal body having a bore or other passage throughout its length, of the conductor after the conductor has been manufactured and hence without the expense of taking special precautions to protect the flexible optical guide against excessive temperature to which it might otherwise be subjected during manufacture of the conductor.

Furthermore, where as is preferred, a flexible optical guide is drawn into the or an elongate compartment of the improved conductor using the or a flexible line after the conductor has been suspended between towers or other upstanding supports mutually spaced along the route of an overhead electric transmission system, there is the further important advantage that the flexible optical guide is not introduced into the conductor until after tension has been applied to the conductor rather than before tension is applied to the conductor as is the current practice.

The invention is further illustrated by a description, by way of example, of two preferred forms of flexible overhead electric conductor for use in the provision of a composite flexible overhead electric conductor incorporating at least one flexible optical guide comprising at least one optical fibre with reference to the accompanying drawings, in which:-

Figure 1 is a transverse cross-sectional view, drawn on an enlarged scale, of the first preferred form of flexible overhead electric conductor, and

Figure 2 is a transverse cross-sectional view, drawn on an enlarged scale, of the second improved form of flexible overhead electric conductor.

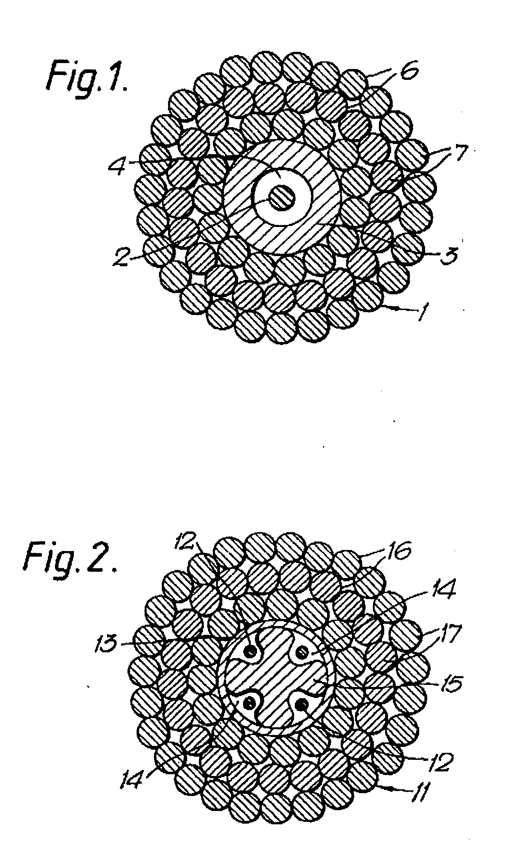

Referring to Figure 1, the first preferred form of flexible overhead electric conductor comprises a central seamless circumferentially rigid aluminium tube 3 in the bore 4 of which throughout the length of the conductor is loosely housed a flexible line 2 of an aromatic polyamide. The seamless aluminium tube 3 is surrounded by three layers 6 of bare aluminium wires 7 each of circular cross-section, the helical lay of the wires of each layer being of opposite hand to that of the helical lay of the wires of the or each adjacent layer.

The second preferred form of flexible overhead electric conductor shown in Figure 2 comprises a composite circumferentially rigid central core consisting of a central solid aluminium elongate member 15 which has in its outer surface four circumferentially spaced helically extending slots 14 and, surrounding the central member, an aluminium tube 13. Loosely housed in each of the elongate compartments defined by the helically extending slots 14 and the surrounding tube 13 is a flexible line 12 of an aromatic polyamide. The composite circumferentially rigid central core is surrounded by three layers 16 of helically wound bare aluminium wires 17 each of circular cross-section, the helical lay of the wires of each layer being of opposite hand to that of the helical lay of the wires of the or each adjacent layer.

When it is desired to suspend between towers mutually spaced along the route of an electric and optical transmission system, a flexible composite overhead conductor having within and extending throughout the length of the conductor at least one elongate compartment in which at least one optical fibre is loosely housed, at least two lengths of the flexible conductor as shown in Figure 1, or of the flexible conductor as shown in Figure 2, are electrically or mechanically connected end-to-end in such a way that the flexible lines 2, or 12, of interconnected conductor lengths are mechanically jointed together and the elongate compartments of interconnected conductor lengths are substantially smoothly continuous. The conductor consisting of two or more interconnected conductor lengths is then strung between a plurality of towers mutually spaced along the route of the system. After the conductor has been strung between the towers, at least one length of flexible optical guide comprising at least one optical fibre is accommodated within and throughout the length of the bore 4, or of one of the elongate compartments 14, within the suspended conductor by detachably connecting the leading end of the length of optical guide to the flexible line 2, or the leading end of one of four lengths of optical guide to one of the flexible lines 12, at one end of the suspended conductor and a tensile force is applied to the flexible line at the other end of the suspended conductor in such a way as to draw the flexible line out of the bore, or elongate compartment, within which it is loosely housed and to draw the flexible optical guide into the bore, or elongate compartment, until the length of optical guide is loosely housed in and throughout the length of the bore, or elongate compartment, of the suspended conductor.

It will be appreciated that the step of accommodating the or a flexible optical guide into the bore, or an elongate compartment, of the suspended conductor can be effected at any time after the conductor has been strung between the towers.

## Claims

1. For use in the provision of a composite flexible overhead electric conductor in which at least one flexible optical guide comprising at least one optical fibre is loosely housed in an elongate compartment within the conductor, a flexible overhead electric conductor comprising at least one layer (6,16) of helically wound bare elongate elements (7,17) of metal or metal alloy, at least one elongate compartment (4,14) within and extending throughout the length of the conductor and, loosely housed in the elongate compartment or at least one of the elongate compartments throughout the length of the compartment, at least one flexible line (2,12) of a non-optical material which is of high tensile strength and which is capable of withstanding the temperatures to which it is likely to be subjected during manufacture of the conductor.

2. A flexible overhead electric conductor as claimed in Claim 1, wherein the or each flexible line (2,12) is at least one wire of steel or other suitable metal or metal alloy.

3. A flexible overhead electric conductor as claimed in Claim 2, wherein the or each wire constituting the or a flexible line has an overall coating of a heat-resistant electrically insulating material.

4. A flexible overhead electric conductor as claimed in Claim 1, wherein the or each flexible line (2,12) is made of an aromatic polyamide.

5. A flexible overhead electric conductor as claimed in any one of the proceeding Claims, wherein the elongate compartment (4,14) is within and extends throughout the length of a substantially circumferentially rigid central core (3;13,15) and the or each layer of helically wound bare elongate elements of metal or metal alloy surrounds the central core.

6. A flexible overhead electric conductor as claimed in Claim 5, wherein the circumferentially rigid central core is an extruded tube (3) of metal or metal alloy.

7. A flexible overhead electric conductor as claimed in Claim 5, wherein the circumferentially rigid central core is of composite form and comprises a central solid elongate member (15) of metal or metal alloy having in its outer surface at least two circumferentially spaced helically extending slots (14) and, surrounding the slotted member, a tube (13) of metal or metal alloy, at least one flexible line (12) being loosely housed in at least one of the elongate compartments defined by the helically extending slots and surrounding tube.

8. A method of suspending between towers or other upstanding supports mutually spaced along the route of an electric and optical transmission system a composite flexible overhead conductor having within and extending throughout the length of the conductor at least one elongate compartment in which at least one flexible optical guide comprising at least one optical fibre is loosely housed, which method comprises electrically and mechanically connecting end-to-end at least two lengths of a flexible electric conductor (1,11) as claimed in any one of the preceding Claims in such a way that the flexible lines (2,12) of interconnected conductor lengths are mechanically jointed together and the elongate compartments (4,14) of interconnected conductor lengths are substantially smoothly continuous; stringing the conductor consisting of two or more interconnected conductor lengths between a plurality of towers or other upstanding supports mutually spaced along the route of the system; and after the conductor has been strung between said towers or other upstanding supports, accommodating at least one length of flexible optical guide comprising at least one optical fibre within and throughout the length of at least one substantially smoothly continuous elongate compartment within the suspended conductor by detachably connecting a leading end of the length of optical guide to the or a flexible line at one end of the suspended conductor and by applying a tensile force to said flexible line at the other end of the suspended conductor in such a way as to draw said flexible line out of the elongate compartment within which it is loosely housed and to draw said flexible optical guide into the elongate compartment until the length of optical guide is loosely housed in and throughout the length of the elongate compartment of the suspended conductor.

Fig.1.

Fig.2.

EP 0 458 607 A1

European Patent Office

# EUROPEAN SEARCH REPORT

Application Number

EP 91 30 4614

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 222 467 (BRITISH TELECOMMUNICATIONS) * page 3, last paragraph – page 5, paragraph 2; figure 9 * | 1,5,7 | G 02 B 6/255 |
| Y | | 9,10 | |
| A | | 8 | |
| | --- | | |
| Y | PATENT ABSTRACTS OF JAPAN vol. 5, no. 36 (P-51)(708), 7 March 1981; & JP – A – 55157708 (FUJITSU K.K.) 8.12.1980 * whole document * | 9,10 | |
| A | idem | 2,3 | |
| | --- | | |
| A | PATENT ABSTRACTS OF JAPAN vol. 10, no. 7 (P-419)(2064), 11 January 1986; & JP – A – 60164705 (FUJITSU K.K.) 27.08.1985 * whole document * | 1,5,6,9 | |
| | ----- | | |
| | | | **TECHNICAL FIELDS SEARCHED (Int. Cl.5)** |
| | | | G 02 B 6/00 |

The present search report has been drawn up for all claims

| Place of search | Date of completion of the search | Examiner |
|---|---|---|
| BERLIN | 27-08-1991 | VON MOERS F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8